# EUROPEAN PATENT SPECIFICATION

(11) **EP 0 599 404 B1**
(45) Date of publication and mention of the grant of the patent: **05.02.1997**
(21) Application number: 93203224.6
(22) Date of filing: 18.11.1993
(51) Int. Cl.: B29B 15/10, B29B 15/12, B29C 70/20

(54) **Process for preparing a composite thermoplastic material reinforced with continuous fibres**
Verfahren zur Herstellung eines thermoplastischen Verbundmaterials verstärkt mit Kontinuierfasern
Procédé pour la fabrication d'un matériau composite thermoplastique renforcé par des fibres continues

(30) Priority: 27.11.1992 IT MI922709
(43) Date of publication of application: 01.06.1994
(73) Proprietor: ENIRICERCHE S.p.A., I-20097 S. Donato Milanese (Milano) (IT); ENICHEM S.p.A., I-20124 Milano (IT)
(72) Inventor: Rossi, Ernesto, I-20132 Milano (IT); Ferrari, Adriano, I-28100 Novara (IT); Zoppi, Erminio, I-20073 Codogno, (Milano) (IT)
(74) Representative: Henke, Erwin

(56) References cited:
- EP-A- 0 133 825
- WO-A-91/12898

## Description

The present invention relates to a process for preparing a thermoplastic composite material reinforced with continuous fibres.

More particularly, the present invention relates to the preparation of thermoplastic composites consisting of bundles of any kinds of continuous filaments, i.e., mineral, organic or metal filaments, impregnated with a thermoplastic powder and coated with an external sheath, also of thermoplastic material, which may be of the same type as of the material which constitutes the impregnating powder, or of a different type from it.

In many applications, traditionally served by the use of metal materials, composite materials were proposed which consist of a polymeric matrix and an inorganic and/or organic reinforcer material, above all fiberglass or carbon fibres. In those cases when a particularly good performance is required as regards the mechanical strength characteristics, composites were proposed in the past which are reinforced with long fibres or, above all, continuous fibres.

The first long- or continuous-fibre composite developed as an alternative material to metal materials, consisted of a thermosetting polymeric matrix, typical examples of which are epoxy resins, unsaturated polyester resins and bismaleimides.

Manufactured articles consisting of these materials are produced by impregnating and/or pre-impregnating said fibres with the monomer and/or a prepolymer and subsequently forming the material by means of such technologies as manual layer deposition, winding, pultrusion and press or autoclave moulding.

In any cases, the fibres are caused to run through solutions of the thermosetting resin, with consequent problems of environmental character and high process costs, arising from the need for managing the recycle and/or the storage of the used solvents.

In order to overcome this type of drawbacks, more recently, composite materials were introduced which use thermoplastic polymers as their matrix material. In this case, when said composite is a long- or continuous-fibre composite, the fabrication technology requires that a semifinished article is preliminarily formed.

An example of preparation of such a type of thermoplastic semifinished article is reported in US-A-4,614,678, which discloses the formation of a composite by means of impregnation of a bundle of filaments with thermoplastic powders, and coating said bundle with a sheath, also of thermoplastic material.

More particularly, the process disclosed in said patent consists of the steps of:
-- unwinding a continuous fibre consisting of a bundle of filaments, from a bobbin;
-- opening, the bundle of filaments, essentially disassembling it into its individual filaments;
-- feeding said open fibre to a closed chamber inside which a thermoplastic polymer powder is kept under fluidized conditions, by means of a gas stream;
-- driving said open fibre through the fluidized polymer during a long enough time in order to cause polymer particles to get deposited around the individual filaments;
-- re-assembling the fibre and applying, around it, a flexible sheltering sheath made of a thermoplastic polymer, preferably of the same nature as of the polymer powder.

The disclosed process necessarily requires using a fluidized bed which causes operating drawbacks, such as:
-- need for having available a tightly sealed chamber for the fluidized bed, in order to prevent any hygienic or environmental problems for the operators;
-- need for working with inert gases, e.g., nitrogen, because using air as the fluidizing means could initiate polymer combustion;
-- need for having available a polymer with a controlled granulometric distribution, because too fine powders, with an average size lower than 40-50 micrometres, are known to make it impossible the fluidized bed to be operated, whilst powders with a larger average size than 150 micrometres render difficult the impregnation of the bundle of filaments, which may consist of filaments of 10-20 micrometres of diameter.

The purpose of the present invention is of supplying a process for preparing thermoplastic composites reinforced with continuous fibres, which process does not display the drawbacks which affect the prior art.

More particularly, the purpose of the present invention is of supplying a process for preparing composites reinforced with continuous fibres in which the operating step using the polymer in the fluidized state is replaced by an analogous operating step working with fixed-bed polymer.

Therefore, the subject matter of the present invention is a process for preparing thermoplastic composites reinforced with continuous fibres, which comprises:
(a) unwinding, from a bobbin, a continuous fibre, consisting of a bundle of filaments;
(b) opening the fibre essentially disassembling it into its individual filaments
(c) dipping and driving the open fibre through a stationary bed consisting of a thermoplastic polymer powder contained in a tank submitted to continuous vibration;
(d) reassembling the fibre and arranging around it a flexible sheltering sheath made of a thermoplastic polymer.

Preferred embodiments are disclosed in the dependent claims.

The composite material obtained by means of the process according to the present invention shows a high flexibility, which makes it possible it to be woven in order to produce highly flexible mats or to be used as such in order to fabricate articles with any shapes or sizes, according to the fibre winding technology. The resulting composite may contain up to 75% by weight of fibre.

Any types of fibres can be used in the process according to the present invention. Typical examples are fiberglass with a count value comprised within the range of from 150 to 2500 tex, the aramidic fibres of Kevlar type, with a count value comprised withing the range of from 1000 to 2000 dtex, or carbon fibres with a count value comprised within the range of from 3x10³ to 12x10³ filaments.

The fibre opening can be carried out by means of a mechanical system based on small diameter rollers, a vibrating system, a pneumatic system, and so forth. After opening the bundle, the fibre is caused to run, after dipping, through a stationary bed consisting of a thermoplastic polymer powder contained inside a tank submitted to continuous vibration.

By "stationary bed", as this expression is used in the present disclosure and in the appended claims, a powder bed or layer is meant in which the individual particles can freely move in the horizontal plane, whilst their vertical motions are exclusively limited to their layer thickness.

The size of polymer particles is not critical as regards accomplishing the stationary bed, to the contrary of what happens with the fluidized beds. The only critical point may derive from the thickness or diameter of the individual filaments which constitute the fibre.

In fact, on considering that the impregnation of the fibre with the powder results from the polymeric particles accumulating around each filament, it is preferable that said particles have an average size which is comparable to (i.e., of the same order of magnitude of) the thickness of each individual filament. In general, the average thickness of the individual polymeric particles is comprised within the range of from 10 to 100 micrometres without that any particular granulometric distributions are necessary, as, on the contrary, is required for powders for fluidized beds.

Any thermoplastic polymers can be used in the process according to the present invention. Examples for such polymers are: polyolefins, such as low-, medium- or high-density polyethylene; polypropylene; polystyrene; ethylene copolymers with propylene and/or butenes; styrene copolymers (ABS, SAN, and so forth), (co)polyesters, such as poly(ethylene terephthalate), poly(butylene terephthalate) and relevant copolymers, polyacrylates and/or polymethacrylates and relevant copolymers, thermotropic liquid-crystal polymers, polyamides 6, 11 and 12, polyimides, polyketones, polysulfones, and so forth, and their mixtures.

The vibrations transmitted to the polymer powder containing tank can be generated by mechanical means, by means of swinging arms, or by means of an electromagnetic head. The intensity of the vibrations is not very high, but it should be high enough in order to prevent that preferential channels are formed in the powder during the fibre running through.

When the impregnation is ended, the fibre is reconstituted and is coated with a thermoplastic sheath in such a way as to have a ratio of powder to sheath, by weight, comprised within the range of from 1:2 to 2:1.

The material the sheath consists of, is selected from the above listed polymers and can be of the same type as of, or of a different type from, the material which constitutes the powder. Also sheaths of polymers which not only are different, but display higher or lower melting temperatures than of the polymers which constitute the powder, can be used as well.

The sheath is arranged around the continuous fibre by means of well known techniques, e.g., by extrusion, which are disclosed in EP-A-188,939 and EP-A-190,522.

In order to better understand the present invention and to practice it, some illustrative, examples thereof, are reported.

### EXAMPLE 1

A bundle of fiberglass with a count of 320 tex, of OCF R28 grade manufactured by Owens Corning Fiberglass, is impregnated with a powder consisting of poly(butylene terephthalate) (PBT), Pibiter N100 grade, manufactured by ECP Enichem Polimeri of Milan. PBT was ground in order to obtain a powder with a particle size of approximately 45 micrometres.

The impregnation is carried out by causing the filament bundle to run, at a speed of 50 metres/minute, through a mechanical opener consisting of 4 rollers of 20 mm of diameter and subsequently through a semicircular element of 20 mm of inner diameter and 500 mm of length. Such an element is caused to vibrate to the horizontal plane (perpendicular to the motion direction of the fibres), by means of an electromagnetic head, with a vibration frequency of 3000 cycles/minute.

At the end of the impregnation, onto the fibre a sheath is applied which consists of the same polymer which constitutes the polymer powder. In Table 1, the weights per each metre of impregnating fibre and, respectively, the weight of the fibre, of the powder and of the sheath, are reported.

The sheath is applied onto the fibre by means of a Maillefer 30 extruder equipped with a die of the type used in the sleeving technique. The diameter of the die is of 3.5 mm; the diameter of the core is of 2.9 mm; the diameter of the fibre guide is of 2.0 mm; the die inlet diameter is of 2.4 mm.

The temperature of the die is kept at 250°C with a fibre speed feed of 50 m/minute.

With the so prepared composite fibre, specimens were prepared for mechanical testing.

The fibre was manually wound around a rectangular plate, taking care of filling the available room as regularly as possible.

The plate was partially welded in order to favour the handling thereof, and then it was cut according to a cutting direction perpendicular to the fibre, so as to prepare individual specimens of 200x200 mm of size. A plurality of individual specimens are unidirectionally stacked and are compression-moulded under the following conditions:
T = 250°C; P = 16 bar; time = 20 minutes in order to obtain a plate of approximately 2 mm of thickness.

The end plate was cut by means of the water-jet technique in order to produce the specimens for mechanical testing.

Mechanical bending tests were carried out by using an MTS frame model 312.31, using a span/thickness ratio of 40, according to ASTM standard D790M (span = distance between the support points).

By "breaking strength" that load is meant at which the specimen undergoes the first damage, as determined by the occurrence of a discontinuity in stress-strain curve.

The tests were carried out at room temperature (23°C). The specimens displayed a higher bending strength than 600 MPa and a higher flexural modulus than 27 GPa.

### EXAMPLES 2 and 3

The tests were carried out as in Example 1, but with impregnation speeds of 75 and 100 metres/minute, respectively.

### EXAMPLES 4, 5 and 6

Tests were carried out as in Examples 1, 2 and 3, except for a powder with an average particle size of 100 micrometres being used.

### EXAMPLES 7, 8 and 9

The tests were carried out as in Examples 1, 2 and 3, by using a bundle of 1200 tex fiberglass of OCF R28 grade manufactured by Owens Corning Fiberglass and with impregnation speeds of 50, 75 and 90 m/minute, respectively.

### EXAMPLES 10, 11 and 12

Tests were carried out as reported in Examples 7, 8 and 9, except for a powder with an average particle size of 100 micrometres being used.

**Table 1**

| Example No. | Powder Particle size, m | Speed, m/min | Fibre count, tex | Fibre | | Powder | | Sheath | | Pre-impregnated material | |
|---|---|---|---|---|---|---|---|---|---|---|---|
| | | | | g/m | % | g/m | % | g/m | % | g/m | % |
| 1 | 45 | 50 | 320 | 0.320 | 66 | 0.061 | 12 | 0.110 | 22 | 0.491 | 100 |
| 2 | 45 | 75 | 320 | 0.320 | 66 | 0.056 | 12 | 0.104 | 22 | 0.480 | 100 |
| 3 | 45 | 100 | 320 | 0.320 | 66 | 0.060 | 13 | 0.098 | 21 | 0.478 | 100 |
| 4 | 100 | 50 | 320 | 0.320 | 52 | 0.165 | 27 | 0.130 | 21 | 0.615 | 100 |
| 5 | 100 | 75 | 320 | 0.320 | 54 | 0.138 | 24 | 0.126 | 22 | 0.584 | 100 |
| 6 | 100 | 100 | 320 | 0.320 | 62 | 0.101 | 20 | 0.091 | 18 | 0.512 | 100 |
| 7 | 45 | 50 | 1200 | 1.200 | 67 | 0.341 | 19 | 0.241 | 14 | 1.782 | 100 |
| 8 | 45 | 75 | 1200 | 1.200 | 71 | 0.328 | 19 | 0.161 | 10 | 1.689 | 100 |
| 9 | 45 | 90 | 1200 | 1.200 | 73 | 0.243 | 15 | 0.202 | 12 | 1.645 | 100 |
| 10 | 100 | 50 | 1200 | 1.200 | 65 | 0.415 | 22 | 0.245 | 13 | 1.860 | 100 |
| 11 | 100 | 75 | 1200 | 1.200 | 69 | 0.321 | 19 | 0.202 | 12 | 1.723 | 100 |
| 12 | 100 | 90 | 1200 | 1.200 | 68 | 0.361 | 20 | 0.209 | 12 | 1.770 | 100 |

## Claims

1. Process for preparing thermoplastic composites reinforced with continuous fibres, which comprises:
(a) unwinding, from a bobbin, a continuous fibre, consisting of a bundle of filaments;
(b) opening the fibre essentially disassembling it into its individual filaments;
(c) dipping and driving the open fibre through a stationary bed consisting of a thermoplastic polymer powder contained in a tank submitted to continuous vibration;
(d) reassembling the fibre and arranging around it a flexible sheltering sheath made of a thermoplastic polymer.

2. Process according to claim 1, in which said composite has a fibre content of up to 75% by weight.

3. Process according to claims 1 or 2, in which the opening of the fibre is carried out with a mechanical roller system.

4. Process according to any of the preceding claims, in which the average thickness of the individual polymeric particles which constitute the powder is comprised within the range of from 10 to 100 micrometres.

5. Process according to any of the preceding claims, in which the vibrations transmitted to the tank which contains the powder polymer are generated by mechanical means, by means of swinging arms, or by means of an electromagnetic head.

6. Process according to any of the preceding claims, in which the weight ratio of the powder to the sheath is comprised within the range of from 1:2 to 2:1.

## Patentansprüche

1. Verfahren zur Herstellung von mit kontinuierlichen Fasern verstärkten thermoplastischen Zusammensetzungen, welches die Schritte umfaßt:
(a) daß von einer Spule eine kontinuierliche Faser abgewickelt wird, die ein Bündel von Filamenten umfaßt,
(b) daß die Faser geöffnet wird, wobei sie im wesentlichen in ihre einzelnen Filamente zerlegt wird,
(c) daß die offene Faser eingetaucht wird in und geführt wird durch ein stationäres Bett, welches ein thermoplastisches Polymer-Pulver umfaßt, das in einem Tank enthalten ist, der einer kontinuierlichen Vibration unterworfen wird,
(d) daß die Faser wieder zusammengesetzt und um sie herum eine flexible schützende Hülle angeordnet wird, die aus einem thermoplastischen Polymer besteht.

2. Verfahren nach Anspruch 1,
in welchem die Zusammensetzung einen Fasergehalt von bis zu 75 Gewichts-% aufweist.

3. Verfahren nach den Ansprüchen 1 oder 2,
in welchem das Öffnen der Faser mit einem mechanischen Rollensystem durchgeführt wird.

4. Verfahren nach einem der vorhergehenden Ansprüche,
in welchem die durchschnittliche Dicke der einzelnen Polymer-Partikel, die das Pulver bilden, innerhalb des Bereiches von 10 bis 100 Mikrometer liegt.

5. Verfahren nach einem der vorhergehenden Ansprüche,
in welchem die zum das Pulver-Polymer enthaltenden Tank übertragenen Vibrationen durch mechanische Mittel, mit Hilfe von Schwingarmen oder mit Hilfe eines elektromagnetischen Kopfes erzeugt werden.

6. Verfahren nach einem der vorhergehenden Ansprüche,
in welchem das Gewichtsverhältnis des Pulvers zur Hülle innerhalb des Bereiches von 1:2 bis 2:1 liegt.

## Revendications

1. Procédé de préparation de composites thermoplastiques renforcés par des fibres continues, comprenant les étapes consistant à :
(a) dérouler, d'une bobine, une fibre continue composée d'un faisceau de filaments ;
(b) ouvrir la fibre en la désassemblant essentiellement en ses filaments individuels ;
(c) immerger et conduire la fibre ouverte dans un lit stationnaire composé d'une poudre de polymère thermoplastique contenue dans un réservoir soumis à des vibrations continues ;
(d) assembler de nouveau la fibre et disposer autour d'elle une gaine protectrice souple composée d'un polymère thermoplastique.

2. Procédé selon la revendication 1, dans lequel le composite a une teneur en fibres pouvant aller jusqu'à 75% en poids.

3. Procédé selon la revendication 1 ou 2, dans lequel l'ouverture de la fibre est effectuée à l'aide d'un système de rouleaux mécaniques.

4. Procédé selon l'une quelconque des revendications précédentes, dans lequel la taille moyenne des particules polymères individuelles qui composent la poudre est comprise entre 10 et 100 micromètres.

5. Procédé selon l'une quelconque des revendications précédentes, dans lequel les vibrations transmises au réservoir qui contient le polymère en poudre sont générées par un moyen mécanique, au moyen de bras oscillants, ou au moyen d'une tête électromagnétique.

6. Procédé selon l'une quelconque des revendications précédentes, dans lequel le rapport de poids entre la poudre et la gaine est compris entre 1/2 et 2/1.
